# EUROPEAN PATENT APPLICATION

(11) **EP 1 166 936 A2**
(43) Date of publication of application: **02.01.2002**
(21) Application number: 01305414.3
(22) Date of filing: 22.06.2001
(51) Int. Cl.: B23H 1/02, B23H 11/00, B23H 7/04

(54) **Acoustic feedback in the control of electrical discharge machining**

(30) Priority: 23.06.2000 GB 0015411
(71) Applicant: The Nottingham Trent University, Nottingham NH1 4BU (GB)
(72) Inventor: Huddleston, John c/o Faculty of Science, Nottingham NG11 8NS (GB); Hill, Roger. c/o Faculty of Science, Nottingham NG11 8NS (GB)
(74) Representative: Charig, Raymond Julian

(57) **Abstract**

An electrical discharge machining apparatus includes an acoustic sensor (A) which is acoustically coupled to a workpiece (3) being machined. The acoustic sensor (A) receives acoustic emissions indicative of conditions prevailing during the machining process. The emissions may include those arising from discharge pulses, arcing conditions and workpiece cracking or degradation.

## Description

The present invention relates to the provision of feedback from and control of electrical discharge machining equipment. The invention has particular utility, though not exclusively so, in the field of electrical discharge machining of ceramic and other brittle materials.

Electrical discharge machining equipment is widely used for the machining of workpieces which are exceptionally hard or brittle, fragile or intricate, or which require the formation of very small or detailed features. Electrical discharge machining (also called "spark erosion") is a well-established technology in which electrical discharge between tool and workpiece results in the gradual removal of material from the workpiece.

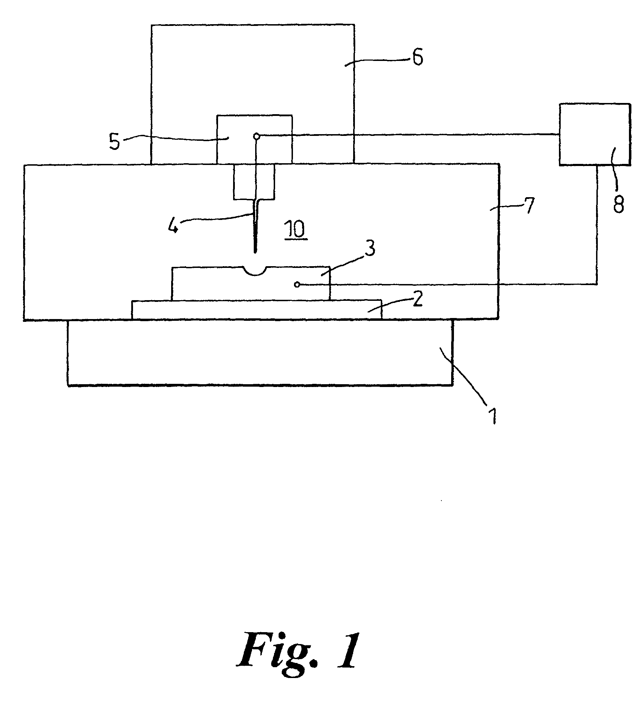

Figure 1 shows a simplified schematic diagram illustrating the basic principles of electrical discharge machining. A workpiece 3 is mounted onto the platform 2 of a machine tool 1. An electrode 4 is mounted on to a servo-controlled positioning mechanism 5 which is controllably displaceable with a very high degree of accuracy in at least x, y, and z directions by a control unit 6 to bring the electrode into close proximity with the workpiece 3 in order to machine the surface thereof. The gap between the electrode 4 and workpiece 3 is filled with an ionisable dielectric fluid 10 which is circulated in cavity 7 in order to enable the generation of high frequency pulsed electrical discharges between the electrode and the workpiece. Each discharge locally dissociates, vaporises or melts a portion of the workpiece 3, which portion (sometimes referred to as swarf) is then cooled in the dielectric fluid 10 and is flushed away by recirculation of the fluid. A power supply unit 8 is electrically connected to both the electrode 4 and the workpiece 3 to provide the requisite pulsed electrical current to drive the electrical discharges.

A number of sophisticated control systems are widely used in the prior art to control the proximity of the electrode 4 with respect to the workpiece 3 and the power of the electrical discharges by continually monitoring the current flow and characteristics thereof.

In particular when electrical discharge machining hard and brittle materials such as ceramics, cracks can form in the workpiece surface or just beneath the surface. This occurs in particular when the electrical discharge machine enters an arcing condition which results in a differential heating of the workpiece at the surface. Following crack formation, detachment of flakes of the workpiece can result. This is particularly undesirable as the pattern to be machined into the workpiece surface is therefore no longer being precisely controlled.

There are, however, circumstances when limited and generally controllable crack formation and detachment of flakes might be acceptable. In particular, where large amounts of stock material must be removed from the workpiece prior to reaching a surface which must then be precision machined, use of the electrical discharge machine in the arcing mode might be desirable, providing that it can be readily controlled.

It is an object of the present invention to provide a feedback and control mechanism in electrical discharge machining which can be used to detect when cracking of a workpiece is occurring during machining. It is a further object of the invention to provide a feedback and control mechanism which can subsequently modify the operation of the electrical discharge machine to prevent or inhibit further cracking. It is a further object of the present invention to provide a feedback and control mechanism which can be used to detect the extent to which cracking and flaking of the workpiece is occurring and subsequently modify the operation of the electrical discharge machine to control the extent to which such cracking and flaking is occurring.

According to one aspect, the present invention provides an electrical discharge machining apparatus including an acoustic sensor adapted to be acoustically coupled to a workpiece in the machining apparatus, the acoustic sensor being adapted to receive acoustic emissions indicative of conditions prevailing during an electrical discharge machining operation, and to generate an acoustic sensor output signal therefrom.

According to another aspect, the present invention provides a method of electrical discharge machining comprising the steps of:
positioning an electrode in proximity to a workpiece to be machined;
initiating electrical discharge events between the electrode and the workpiece in order to dissociate a small portion of the workpiece from the remainder of the workpiece;
receiving acoustic emissions indicative of conditions prevailing during or between electrical discharge events and generating an acoustic sensor output signal therefrom;
using said output signal to determine conditions prevailing during the electrical discharge machining operation.

Embodiments of the present invention will now be described by way of example and reference will be made to the accompanying drawings in which:
Figure 1 shows a schematic diagram of a conventional electrical discharge machining apparatus useful for illustrating the basic principles of electrical discharge machining;
Figure 2 shows a schematic diagram of an electrical discharge machining apparatus according to a presently preferred embodiment of the present invention;
Figure 3 shows an exemplary acoustic emission signal received by the apparatus of figure 2 compared against a first derivative current waveform during an arcing state of the electrical discharge machining process;
Figure 4 shows an exemplary acoustic emission signal received by the apparatus of figure 2 compared against a first derivative current waveform during a single electrical discharge event in the electrical discharge machining process; and
Figure 5 shows an exemplary acoustic emission signal received by the apparatus of figure 2 compared against a first derivative current waveform during a time period after a last discharge of a pulse or series of pulses in the electrical discharge machining process.

In the present invention, it has been recognised that acoustic emissions are detectable from both the discharge processes and also from events taking place on or below the surface of the workpiece. These acoustic emissions can provide useful information indicative of the state of the electrical discharge machining process. Such acoustic information can be very valuable in providing feedback and control of the electrical discharge process. Such information has been determined to be particularly valuable when machining ceramic materials which are highly brittle and subject to uncontrolled cracking or damage as discussed earlier.

Electrical discharge machining techniques are generally applicable to conductive material workpieces, but the invention is also applicable to more recent techniques involving the machining of non-conductive workpieces using, for example, special electrolytes in place of the dielectric fluid or using specially coated workpieces. Throughout the specification, references to electrical discharge machining are intended to also encompass these more recent techniques.

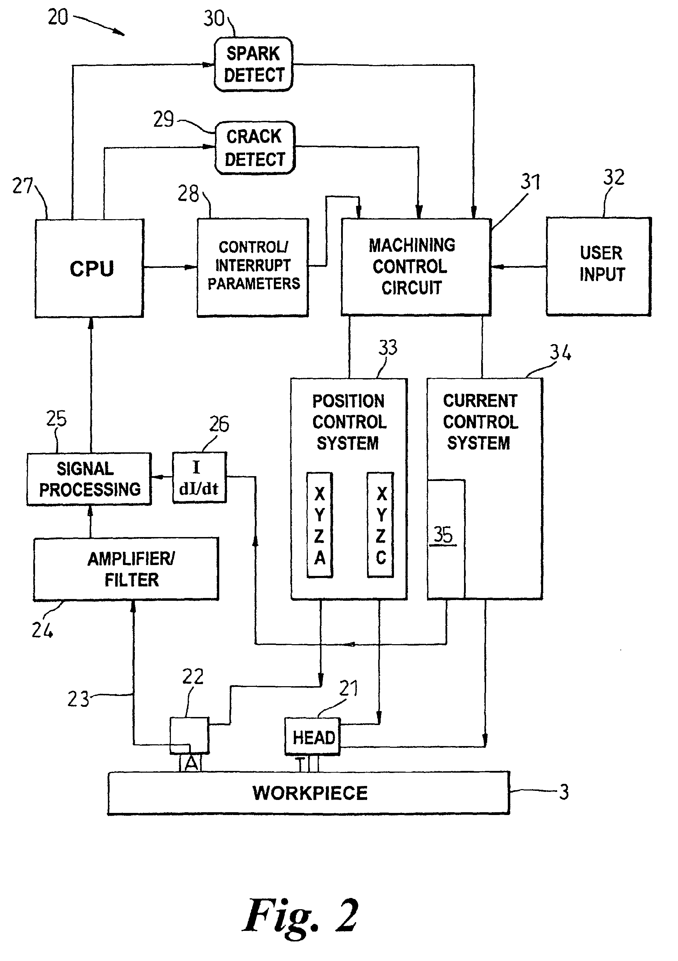

With reference to figure 2, a presently preferred electrical discharge machining apparatus 20 will now be described in detail. A workpiece 3 is positionable relative to an electrical discharge machining head 21 having an electrode T. The relative positioning of the workpiece 3 and head 21 may be obtained by movement of the head 21 (or electrode T within the head 21) or by movement of the workpiece 3 on a stage (such as described in connection with figure 1), or a combination of both. It will be understood that both configurations for relative positioning of workpiece and electrode are suitable for the present invention, using conventional x-y-z positioning mechanisms. The relative positioning mechanism may also include relative angular displacement control and relative rotational displacement control between the tip T and the workpiece 3, according to conventional requirements.

The head 21 and/or stage conveying the workpiece 3 are connected to a position control system 33 and the head 21 is also connected to a current delivery and control system 34 for supplying electrical discharge current to the electrical discharge electrode T in the head 21 during the electrical discharge machining process.

An acoustic sensor A mounted in an acoustic head assembly 22 is acoustically coupled to the workpiece 3. The acoustic sensor A may be stationary or moveable relative to the workpiece 3 and/or head 21. If moveable, the acoustic head assembly 22 is also coupled to the position control system 33 for controlling positioning thereof.

The acoustic sensor A is preferably acoustically coupled to the workpiece by direct contact therewith. Alternatively, the acoustic sensor is acoustically coupled to the workpiece via the acoustic conduction properties of the dielectric fluid 10 providing the sparking or discharge medium between electrode T and the workpiece 3. Alternatively, the acoustic coupling may be enhanced by a coupling gel between the acoustic sensor A and the workpiece 3. The coupling gel may be somewhat more viscous than the dielectric fluid to prevent dispersion of the coupling gel in the circulating dielectric fluid.

The acoustic sensor 22 provides an acoustic sensor output signal on line 23 to an amplification and filtration system 24 to amplify the acoustic sensor output and to remove unwanted noise, such as that deriving from environmental acoustic noise sources, machine drive mechanisms and other machine noise not intimately connected with the electrical discharge machining process, and other interference. Preferably, acoustic sensor output signals below 100kHz are removed prior to signal processing. The high pass filtration may be achieved by selective signal amplification or by acoustic transducer resonant sensitivity. Preferably, suitable earthing arrangements are implemented to increase the immunity of the acoustic system to electromagnetic interference.

A signal indicative of the electrical current being delivered to the EDM head 21 by the current control system 34 is passed to a differentiating and amplification circuit 26 to provide a current signal, and a current derivative signal which is a function of dI/dt, where *I* is the electrical current comprising the electrical discharge signal and *t* is time. The current signal, the current derivative signal and the amplified / filtered acoustic sensor output signal are passed to signal processing circuitry 25. These signals are then passed, in digital form, to a decision making circuit 27 which may be a suitably programmed computer system. The decision making circuit 27 is programmed to receive the various signal inputs relating to acoustic emission, current, and rate of change of current, generally referred to as acoustic emission characteristics and current characteristics. From these characteristics, the decision making circuit 27 is adapted to determine a state of the electrical discharge machining process, such as whether an acoustic emission relates to a spark (discharge) or arc (discharge) or whether an acoustic emission relates to a cracking event in the workpiece material being machined.

The various decision-making operations may be carried out by separate software or hardware modules schematically indicated by a spark detection module 30 and a cracking detection module 29. A further software or hardware module 28 may provide control and/or interrupt parameters to be used in the control of the electrical discharge machining process, based on the detected acoustic and current characteristics.

The various decision outputs and control parameter outputs are passed to a machine control circuit 31 which is operative to determine whether the machining process is operating within the desired parameters and if necessary instruct changes in control signals to be applied to the position control system 33 and the current control system 34. A user control unit 32 may be connected to the machine control circuit 31 to provide for user specified control parameters or overrides, eg. for determining acceptable control parameters for different workpiece materials or machining patterns. Alternatively, these user inputs may be provided by direct interface with the decision making circuit 27.

In use, the condition of the workpiece 3 and the status of the electrical discharge process is continually monitored by the acoustic emission feedback circuit, generally comprising elements 22 to 31 of figure 2. In conventional electrical discharge machining apparatus, an arcing condition must generally be avoided. This is particularly so when machining brittle materials because such arcing conditions, when uncontrolled, lead to unquantifiable deterioration in the workpiece. In conventional machining apparatus, the detection of an arcing condition may be achieved simply by current flow detection. This condition triggers tool head retraction and cessation of discharge pulses, to enable particles causing the arcing to be flushed away by the dielectric fluid prior to recommencement of the discharge process. Because no information regarding the state of the workpiece is readily obtainable from the detection of arcing from the current signals alone, the machining process must be interrupted to preserve integrity of the workpiece.

By contrast, in the apparatus of the present invention, arcing can be much more reliably detected by characteristic acoustic emissions used in conjunction with current flow information, and more significantly, qualitative and/or quantitative evidence of any cracking taking place can be monitored. This enables a decision to be taken as to whether to allow a degree of cracking to continue during fast removal of workpiece material in non-critical machining areas. This is particularly useful, for example, when large volumes of workpiece material must be removed. Thus, the acoustic emission feedback enables much larger volumes of material to be safely removed at speed without compromising workpiece or machining pattern integrity.

Further, the acoustic emission feedback may provide a degree of quantitative information regarding the progress of the machining operation. For example, minor cracking may be permitted in certain parts of the machining process. When a degree of cracking is determined which exceeds a predetermined threshold, rather than interrupting machining, the feedback system causes the machining apparatus to enter a different (reduced power) control regime using a different set of control parameters to reduce the microcracking events to an acceptable level.

In a further improvement, multiple acoustic sensors A may be deployed. This allows for automatic acoustic location of cracking sites using triangulation or signal pattern recognition methods in the signal processing circuitry 25. Thus, the position of origin of an acoustic emission in or on the surface of the workpiece is possible.

Conventional electrical discharge machining apparatus uses a digitised pattern or "machining map" of the workpiece to automatically control, by computer, the positioning of the machining head and electrode. This ensures that only appropriate areas of workpiece material are removed so as to ensure that the desired pattern is properly machined into the workpiece.

In the present invention, comparison of the cracking sites identified by acoustic location with the computer control pattern or machining enables automatic variation of the machining control parameters so as to ensure that cracking and other workpiece damage caused during the machining process is not permitted to extend beyond the intended material removal area or volume.

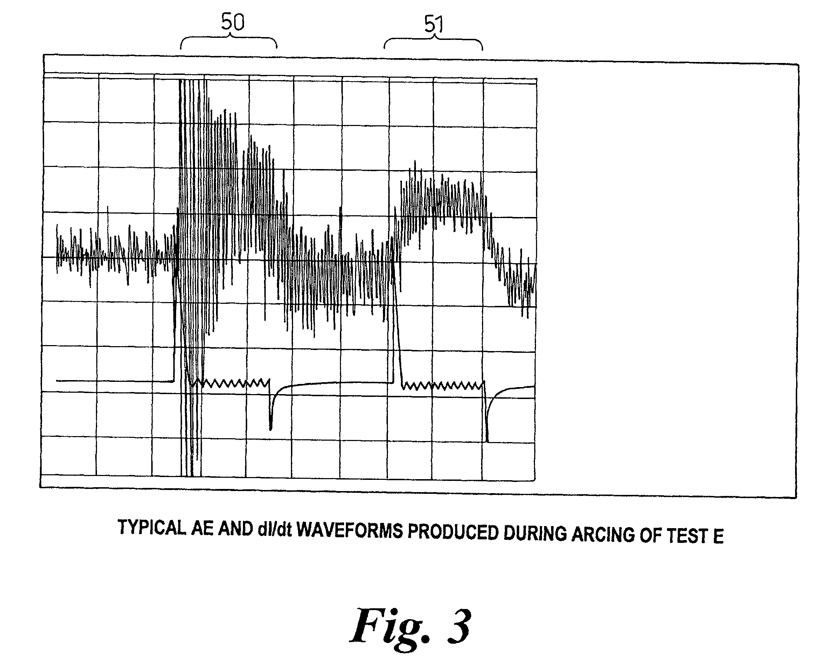

With reference to figures 3 to 5, exemplary acoustic and current characteristics are illustrated. In figure 3, an example is shown in which machine electrical parameters have been set to allow machining to "deteriorate" towards the arcing condition. A typical acoustic signal generated following initiation of the first discharge is shown in the upper trace. The first time derivative of current, *dI/dt,* is shown in the lower trace. Arcing events shown during the periods 50, 51 show a considerable increase in the initial and following amplitude of the acoustic sensor output signal, compared with the non-arcing conditions.

The difference in acoustic signal has been demonstrated to be adequate for differentiation between the arcing condition and the normal machining condition using the acoustic sensor output signal and knowledge of the current waveform. Specific acoustic signal amplitudes or acoustic signal energy covering a time from pulse initiation and including the pulse discharge times 50, 51 (in the example, approximately 200 microseconds, being the time difference between positive and negative *dI/dt* spikes) can be derived to uniquely identify and define the presence of the arcing process. This is not apparent from the features of the current waveform.

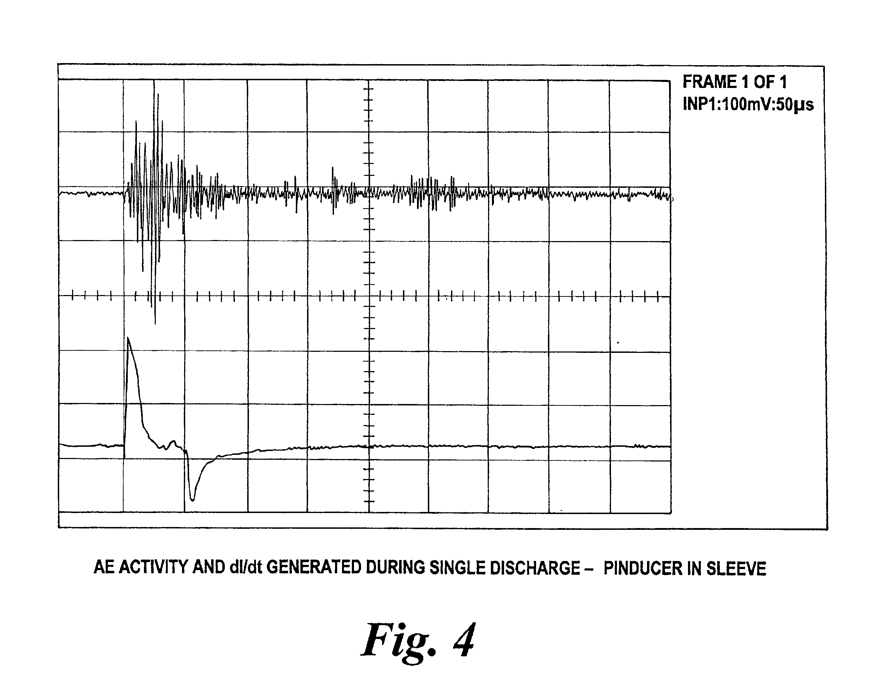

In figure 4, an example of acoustic sensor output signal and first time derivative of current, *dI/dt,* are shown for a single spark discharge in the normal machining process (ie. without arcing). The lower amplitude, lower energy, acoustic signal for a single EDM machine current discharge shows an arbitrary value related to the acoustic transducer sensitivity and the conditions of electronic filtering and electronic gain used. However, the two parameters of energy and/or amplitude clearly distinguish the different machining conditions of arcing or sparking when measured under the same signal processing conditions.

Current waveforms and acoustic signal waveforms are captured and stored in the computer memory in decision making circuit / computer 27. Acoustic amplitude and/or acoustic energy are evaluated from data gathered within a time window equal to, or close to, the duration of the current discharge pulse or pulses applied to the material being machined. A different time window may be used where unusual current discharge conditions apply, or where this is more appropriate for acoustic detection and differentiation of arcing or sparking conditions (for instance, on large machining samples with a longer acoustic path), but this generally will occur during the discharge time.

In redefining any time window used to determine arcing or sparking conditions, the aim is to define a characteristic of the current discharge process associated with machining and relate this to a signal processing parameter derived from the acoustic signal.

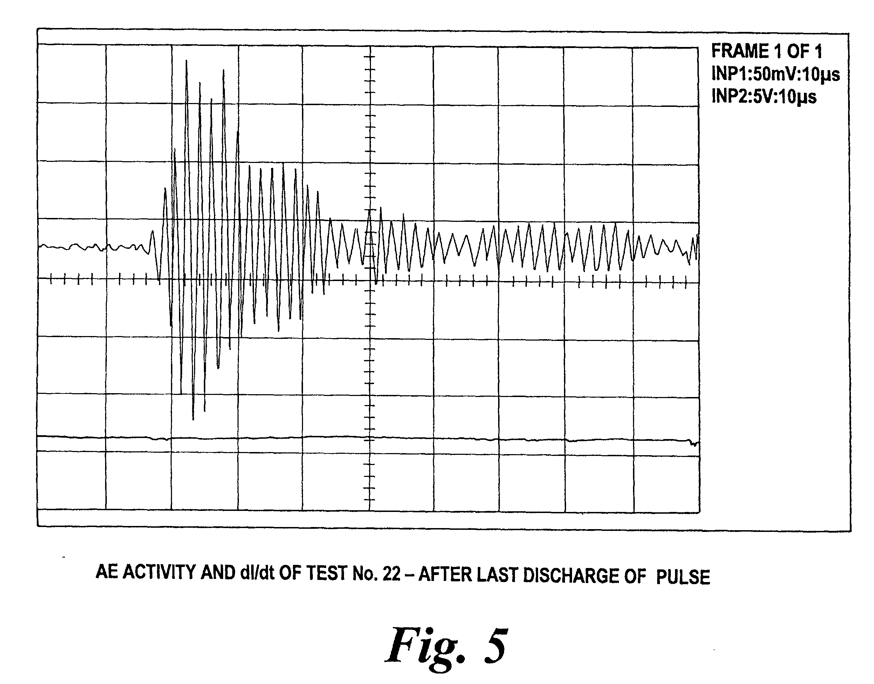

In figure 5, an acoustic sensor output signal is shown during a time interval in which no current discharge activity is taking place. This signal is obtained during a time window after an EDM discharge pulse or pulse train, and before a subsequent pulse or pulse train. The lack of a current discharge condition is evidenced by the quiescent current signal (lower trace). If, during this period, an acoustic signal is obtained (as shown in the upper trace), then this signal provides a qualitative and/or quantitative indication of cracking within or at the surface of the sample being machined. A second time window is set to acquire this delayed acoustic signal and energy and to confirm the lack of current discharge. The acoustic signal in the absence of current discharge is used as the evidence of cracking.

When large quantities of material may be removed from the workpiece without risk of damage, acoustic signals indicating cracking may be ignored, or quantified to indicate whether current should be reduced. This decision may be taken either by circuit 27 or within the machining control circuit 31. Where precision machining is required, indications of cracking from the acoustic signal may be used to impose different machining parameters to suppress such cracking. For example, the workpiece position relative to the electrode may be altered; electrical current being delivered by the electrode may be reduced or otherwise altered; time intervals between discharge events may be varied; or the mode of operation of the electrical discharge machining apparatus may generally be altered (for instance, using machine head retraction).

The present invention has been described with reference to certain specific embodiments as depicted in the drawings which are not intended to be in any way limiting. Variations to the embodiments described are within the scope of the appended claims.

## Claims

1. An electrical discharge machining apparatus including an acoustic sensor adapted, when in use, to be acoustically coupled to a workpiece in the machining apparatus, the acoustic sensor being adapted to receive acoustic emissions indicative of conditions prevailing during an electrical discharge machining operation, and to generate an acoustic sensor output signal therefrom.

2. An electrical discharge machining apparatus according to claim 1 wherein the acoustic sensor is adapted to generate said acoustic sensor output signal indicative of a state of the workpiece undergoing electrical discharge machining.

3. An electrical discharge machining apparatus according to claim 2 wherein the acoustic sensor is adapted to generate said acoustic sensor output signal indicative of cracking events in the workpiece.

4. An electrical discharge machining apparatus according to any preceding claim in which the acoustic sensor is adapted to be acoustically coupled to the workpiece by direct contact therewith.

5. An electrical discharge machining apparatus according to any one of claims 1 to 4 in which the acoustic sensor is adapted to be acoustically coupled to the workpiece by means of fluid circulating between the workpiece and an electrode of the electrical discharge machining apparatus.

6. An electrical discharge machining apparatus according to any one of claims 1 to 4 in which the acoustic sensor is adapted to be acoustically coupled to the workpiece by means of a coupling gel relatively insoluble in a dielectric fluid between the workpiece and an electrode of the electrical discharge machining apparatus.

7. An electrical discharge machining apparatus according to any preceding claim further including a feedback control system adapted to receive said acoustic sensor output signal and modify machining parameters according thereto.

8. An electrical discharge machining apparatus according to claim 7 wherein said machining parameters include any of the following: workpiece position relative to an electrical discharge machining apparatus electrode; electrical current being delivered by an electrical discharge machining apparatus electrode; time intervals between discharge events; mode of operation of the electrical discharge machining apparatus electrode.

9. An electrical discharge machining apparatus according to claim 1 further including means for defining a discharge time window in which a current discharge is taking place in which to analyse said acoustic sensor output signal to determine the existence of an arcing condition.

10. An electrical discharge machining apparatus according to claim 9 in which the means for defining said discharge time window comprises current detection means.

11. An electrical discharge machining apparatus according to claim 1 or claim 9 further including means for defining a non-discharge time window in which no current discharge is taking place in which to analyse said acoustic sensor output signal to determine the occurrence of cracking events in the workpiece.

12. An electrical discharge machining apparatus according to claim 11 in which the means for defining said non-discharge time window comprises current detection means or a predefined discharge period timer.

13. An electrical discharge machining apparatus according to claim 10 or claim 12 in which said current detection means comprises means for determining the first time derivative of the discharge current.

14. An electrical discharge machining apparatus according to claim 1 including a plurality of distributed acoustic sensors, and including signal processing means for determining a position of origin of a received acoustic emission by comparison of said distributed acoustic sensor output signals.

15. An electrical discharge machining apparatus according to claim 7 further including control means for using said acoustic sensor output signal in conjunction with a machining map to determine when to modify said machining parameters.

16. A method of electrical discharge machining comprising the steps of:
positioning an electrode in proximity to a workpiece to be machined;
initiating electrical discharge events between the electrode and the workpiece in order to dissociate a small portion of the workpiece from the remainder of the workpiece;
receiving acoustic emissions indicative of conditions prevailing during or between electrical discharge events and generating an acoustic sensor output signals therefrom;
using said acoustic sensor output signal to determine conditions prevailing during the electrical discharge machining operation.

17. The method of claim 16 wherein the acoustic sensor output signal is used to indicate a state of the workpiece undergoing the electrical discharge machining process.

18. The method of claim 17 wherein the acoustic sensor output signal is used to indicate cracking events in the workpiece.

19. The method of claim 16 further including modifying machining parameters according thereto said determined conditions prevailing during the electrical discharge machining operation.

20. The method of claim 16 further including the step of defining a discharge time window in which a current discharge is taking place and using the acoustic sensor signal output during said discharge time window to determine the existence of an arcing condition.

21. The method of claim 16 or claim 20 further including the step of defining a non-discharge time window in which no current discharge is taking place and using the acoustic sensor signal output during said non-discharge time window to determine the occurrence of cracking events in the workpiece.

22. The method of claim 16 further including the step of receiving an acoustic emission at a plurality of distributed acoustic sensors, and determining a position of origin of the received acoustic emission by comparison of the outputs of said distributed acoustic sensors.

23. The method of claim 19 further including the step of using said acoustic sensor signal output in conjunction with a machining map to determine when to modify said machining parameters.
